Europäisches Patentamt

European Patent Office

Office européen des brevets

(19)

(11) Veröffentlichungsnummer : **0 170 773**
**B1**

(12) # EUROPÄISCHE PATENTSCHRIFT

(45) Veröffentlichungstag der Patentschrift :
15.06.88

(21) Anmeldenummer : 85103597.2

(22) Anmeldetag : 26.03.85

(51) Int. Cl.⁴ : **B 23 Q 11/08**, F 16 H 19/00

(54) **Zahnstangentrieb für die Erzeugung einer Relativbewegung zwischen zwei aneinandergeführten Maschinenteilen.**

(30) Priorität : 05.06.84 DE 3420936

(43) Veröffentlichungstag der Anmeldung :
12.02.86 Patentblatt 86/07

(45) Bekanntmachung des Hinweises auf die Patenterteilung : 15.06.88 Patentblatt 88/24

(84) Benannte Vertragsstaaten :
AT BE CH DE FR GB IT LI NL SE

(56) Entgegenhaltungen :
DE-C- 1 101 096
DE-U- 1 945 425

(73) Patentinhaber : KUKA Schweissanlagen & Roboter GmbH
Blücherstrasse 144
D-8900 Augsburg (DE)

(72) Erfinder : Zimmer, Ernst
Michael-Steinherr Strasse 34
D-8904 Friedberg (DE)

(74) Vertreter : Ernicke, Hans-Dieter, Dipl.-Ing. et al
Schwibbogenplatz 2b
D-8900 Augsburg (DE)

EP 0 170 773 B1

Jouve, 18, rue St-Denis, 75001 Paris, France

## Beschreibung

Die Erfindung betrifft einen Zahnstangentrieb entsprechend dem Oberbegriff des Hauptanspruches.

Nach einem eigenen, nicht vorveröffentlichten Stand der Technik der Anmelderin werden die beiden Maschinenteile über einen Zahnriementrieb relativ zueinander bewegt. Dieser Zahnriemen deckt die Führungsbahn am einen Maschinenteil ab und ist am anderen Maschinenteil in einer Schlaufe unter zwei Spannrollen und über einer demgegenüber höher angeordneten Umlenkrolle geführt, die als Antriebsritzel ausgebildet ist.

Dieser Zahnriementrieb ermöglicht zwar sehr genaue, exakt steuerbare Bewegungen, ist aber nicht für beliebige Führungslängen geeignet. Zum einen führt die elastische Dehnung des Zahnriemens bei großen Führungslängen zu Ungenauigkeiten des Stelltriebes. Zum anderen sind zur Zeit Zahnriemen mit einer Länge von mehreren Metern und geeigneter Qualität noch nicht erhältlich.

Abhilfe hierfür könnte über einen Zahnstangentrieb geschaffen werden, wie er dem Grunde nach aus der DE-PS 11 01 096 bekannt ist. Diese Schrift beschreibt einen Zahnstangentrieb für die Bewegung einer Bohrpinole in einem Reitstock auf einer Drehbank, bei der die Zahnstange über einen Riemen abgedeckt ist, der im Reitstock in einer Schlaufe über eine Umlenkrolle geführt ist. Unterhalb der Umlenkrolle sitzt das Antriebsritzel, das von der Umlenkrolle selbst unabhängig ist.

Das Problem besteht nun darin, daß der Zahnriementrieb für große Führungslängen ohne Probleme auf einen Zahnstangentrieb umgerüstet werden soll. Dazu wird angestrebt, die Grundkonzeption der beiden Maschinenteile beizubehalten und einfach nur die beiden Triebe gegeneinander auszutauschen. Dies ist mit dem vorbekannten Zahnstangentrieb aus der DE-PS 11 01 096 nicht möglich.

Es ist daher Aufgabe der vorliegenden Erfindung, einen gattungsgemäßen Zahnstangentrieb aufzuzeigen, der gegen einen Zahnriementrieb ohne weiteres umrüstbar ist.

Die Erfindung löst dieses Problem mit den Merkmalen im Kennzeichenteil des Hauptanspruches.

Die Antriebswelle hat damit beim Zahnriemen- und beim Zahnstangentrieb die gleiche Lage, so daß das Maschinenteil insoweit nicht geändert zu werden braucht. Desgleichen können die Spannrollen beibehalten werden. Bevorzugt wird die komplette Antriebswelle mit Antriebsritzel für den Zahnriemen gegen die komplette Antriebswelle mit schmälerem Antriebsritzel des Zahnstangentriebes getauscht, und die dann erforderliche, relativ zu Antriebswelle und Antriebsritzel drehbare Umlenkrolle wird in zwei Teilen zu beiden Seiten dieses Ritzels auf der Antriebswelle gelagert. Unter Beibehaltung der Antriebswelle können auch nur die Ritzel getauscht werden. Der Riemen ist dann ein glatter Abdeckriemen, der auf der Umlenkrolle über das Ritzel hinweggeführt wird. Auf diese Weise brauchen beim Umrüsten nur wenige Teile ausgetauscht zu werden, und die Grundkonzeption der beiden Maschinenteile bleibt erhalten.

Erfindungsgemäß kann der Zahnstangentrieb unterschiedlich ausgebildet sein. Im einen Ausführungsbeispiel treibt das Antriebsritzel über ein Zwischenrad auf die Zahnstange, während es im anderen Ausführungsbeispiel direkt mit der Zahnstange kämmt.

Die Anordnung des Zwischenrades und seine besondere Lagerung in einer Gabelschwinge in Verbindung mit einer Exzenterverstellung seiner Achse erlauben eine spielfreie Anstellung des Zwischenrades gegenüber der Zahnstange. Diese Ausführungsform ist besonders für große und schwere Maschinenschlitten geeignet, da hierdurch nur auf die Parallelität von Zahnstangenoberkante und Führungsbahn zu achten ist. Durch die Führung verursachte etwaige Höhendifferenzen, die sich in einem Zahnspiel auswirken, können dann über die Exzenterverstellung ausgeglichen werden, ohne daß an der Führung der beiden Maschinenteile etwas verändert werden muß. Durch die Wahl entsprechender Toleranzen braucht die Paarung Antriebsritzel/Zwischenrad keine eigene Anstellmöglichkeit zu besitzen.

Der direkte Zahnstangentrieb der anderen Ausführungsform eignet sich besonders für leichtgewichtige und kleine Maschinenschlitten. Bei diesen ist bereits von der Fertigungsseite her die Parallelität und der Abstand von der Zahnstangenoberkante und Führungsbahn bzw. der Abstand von Antriebsritzel und Führungsbahn präzise einstellbar. Die gewünschte Spielfreiheit des Zahnstangentriebes kann damit durch geeignete Toleranzwahl erzielt werden.

Um ein schnelles Umrüsten von Zahnstangenauf Zahnriementrieb und umgekehrt zu ermöglichen, empfiehlt es sich, das Antriebsritzel mit der Antriebswelle als eine Einheit zu gestalten. Die Lagerung der Antriebswelle kann auf einer Seite direkt im Schlittengestell und auf der anderen Seite über den Wellenstummel des Untersetzungsgetriebes im Getriebelager erfolgen. Es empfiehlt sich, die Verbindung der Antriebswelle mit dem Wellenstummel als Steckverbindung auszuführen, bei der die Drehschlüssigkeit über eine spielfreie, selbstzentrierende Verzahnung, vorzugsweise eine Evolventenverzahnung, herbeigeführt wird.

Im Hinblick auf diese Evolventenverzahnung und die Verwendung unterschiedlicher Antriebswellen- bzw. Ritzelwerkstoffe ist die Anordnung einer Buchse aus festem Werkstoff vorteilhaft. Für Zahnriementriebe werden nämlich Antriebswelle und Ritzel aus einem weicheren Werkstoff, beispielsweise Aluminium, verwendet. Um eine ungünstige, verschleißbehaftete Werkstoffpaarung im Bereich der Evolventenverzahnung des Wellenstummels zu vermeiden, wird die Antriebswelle auf eine Stahlbuchse gesteckt und drehschlüssig verschraubt. Die Stahlbuchse wird dann einfach auf den Wellenstummel mit der Verzahnung gesteckt.

Eine Antriebswelle aus hartem Werkstoff kann auch ohne Buchse direkt auf den Wellenstummel gesteckt werden.

Die erfindungsgemäße Ausgestaltung der Antriebswelle erfordert beim Umrüsten des Triebes nur reine Montagearbeiten und keine Werkstoffbearbeitung. Die Steckverbindung und die besondere Lagerung der Antriebswelle im Gehäuse haben im weiteren den Vorteil, daß zum Umrüsten nur die Festlagerseite entfernt zu werden braucht, und die Antriebswelle kann direkt oder mitsamt ihrer Buchse vom Wellenstummel abgezogen und gegen die andere Antriebswelle ausgetauscht werden.

Der erfindungsgemäße Zahnstangentrieb kann in beiden Ausführungsformen mit unterschiedlichen Arten von Führungen der beiden Maschinenteile kombiniert werden. Es empfiehlt sich allerdings, die Führung jeweils in einem bis auf einen Längsschlitz vollständig geschlossenen Führungskanal anzuordnen, der durch den Riemen bzw. durch das eine Maschinenteil abgedeckt ist. Auf diese Weise wird Schmutzpartikeln, Staub, Öl, Fett oder dgl. der Zutritt zur Führung verwehrt, was besonders für hochgenaue Stelltriebe von Bedeutung ist. Derartige Stelltriebe, wie sie insbesondere für Manipulatoren verwendet werden, benötigen zur Erzielung der gewünschten Positioniergenauigkeit eine stets saubere Führung. Je nach Art der Führung kann der Führungskanal durch die Führungsbahn selbst oder durch seitliche Abdeckbleche geschaffen werden.

In Verbindung mit dem direkten Zahnstangentrieb ergibt sich hierbei eine Besonderheit. Durch die unterschiedlichen Größen- und Höhenzuordnungen von Ritzel und Zahnstange einerseits sowie Abdeckblechen und Umlenkrolle andererseits ergibt sich die Notwendigkeit, für Umlenkrolle und Abdeckbleche eine Überlappung in der Höhe herbeizuführen. Dies geschieht durch eine stufenartige Ausbildung der den Schlitz bildenden Ränder der Abdeckbleche, die dabei in entsprechend profilierte Umfangsnuten der Umlenkrolle greifen. Diese Ausführungsform ist jedoch nur in Verbindung mit weichen Riemen notwendig, die an ihren Kanten für deren Stützung auf der Umlenkrolle aufliegen müssen. Bei der Verwendung eines metallischen Bandes, insbesondere eines Stahlbandes, was nach der Erfindung ebenfalls vorgesehen ist, brauchen die Ränder nicht abgestützt zu werden.

Damit kann die Umlenkrolle schmäler als die Riemenbreite sein und in den Schlitz mit dem Antriebsritzel eingreifen. Das breitere Metallband liegt dann immer noch auf den Rändern der Abdeckbleche auf.

Der erfindungsgemäße Zahnstangentrieb kann aber auch mit einer nur teilweise abgedeckten Führung oder nur mit einer Abdeckung der Zahnstange ohne Schutz für die Führung verwendet werden. In jedem Fall ist jedoch zumindest die Zahnstange abgedeckt.

Bei den gezeigten Ausführungsbeispielen ist die Zahnstange jeweils am einen, relativ oder absolut ortsfesten Maschinenteil und der Antrieb am anderen, demgegenüber bewegten Maschinenteil angeordnet. Die in den Ausführungsbeispielen getroffene, kinematische Zuordnung der beiden Maschinenteile kann auch umgekehrt sein. Die Begriffe ortsfest und beweglich beziehen sich nur auf die Paarung der beiden Maschinenteile. Relativ ortsfest bedeutet in diesem Zusammenhang, daß dieses Maschinenteil seinerseits gegenüber dem Gestell oder weiteren Maschinenteilen beweglich gelagert sein kann.

Der Führungskanal ist am Maschinenteil mit der Führungsbahn angeordnet, wobei dieses Maschinenteil das bewegliche oder ortsfeste Teil der Paarung sein kann.

Der erfindungsgemäße Zahnstangentrieb ermöglicht eine Art Baukastensystem zum Aufbau von kompletten Bewegungseinheiten, insbesondere für Manipulatoren. Derartige Manipulatoren können mehrdimensionale Bewegungen erzeugen und haben zwei oder drei translatorische sowie unter Umständen weitere rotatorische Achsen. Für diese translatorischen Stelltriebe können damit untereinander baugleiche Maschinenteile verwendet werden, wobei für die kurzhubigen Achsen Zahnriementriebe und für die langhubige Achse ein Zahnstangentrieb vorgesehen sein können.

Die Erfindung ist in den Zeichnungen schematisch und beispielsweise dargestellt. Im einzelnen zeigen :

Fig. 1 : einen Längsschnitt durch zwei Maschinenteile und einen Zahnstangentrieb,

Fig. 2 : einen Querschnitt der Anordnung gemäß Fig. 1 entlang der Schnittlinie II-II,

Fig. 3 : eine Detailansicht der exzentrischen Zwischenradverstellung gemäß Schnittlinie III-III aus Fig. 2,

Fig. 4 : einen Querschnitt durch eine Anordnung gemäß Fig. 1 entlang der Schnittlinie IV-IV,

Fig. 5 u. 6 : Detailansichten der Riemenführung,

Fig. 7 : eine perspektivische Darstellung einer Bewegungseinheit eines Manipulators mit drei translatorischen Achsen,

Fig. 8 : einen Querschnitt durch eine Führung der beiden Maschinenteile in Variation zu Fig. 4,

Fig. 9 : einen Längsschnitt durch zwei Maschinen und einen Zahnstangentrieb in Variation zu Fig. 1 und

Fig. 10 : einen Querschnitt durch eine Anordnung gemäß Fig. 9 entlang der Schnittlinie X-X.

Bei den gezeigten Ausführungsbeispielen wird davon ausgegangen, daß das eine Maschinenteil 1 als ortsfester Balken und das andere Maschinenteil 2 als bewegtes Teil, beispielsweise ein Werkzeugträger ausgebildet ist. Diese Zuordnung kann aber auch umgekehrt sein.

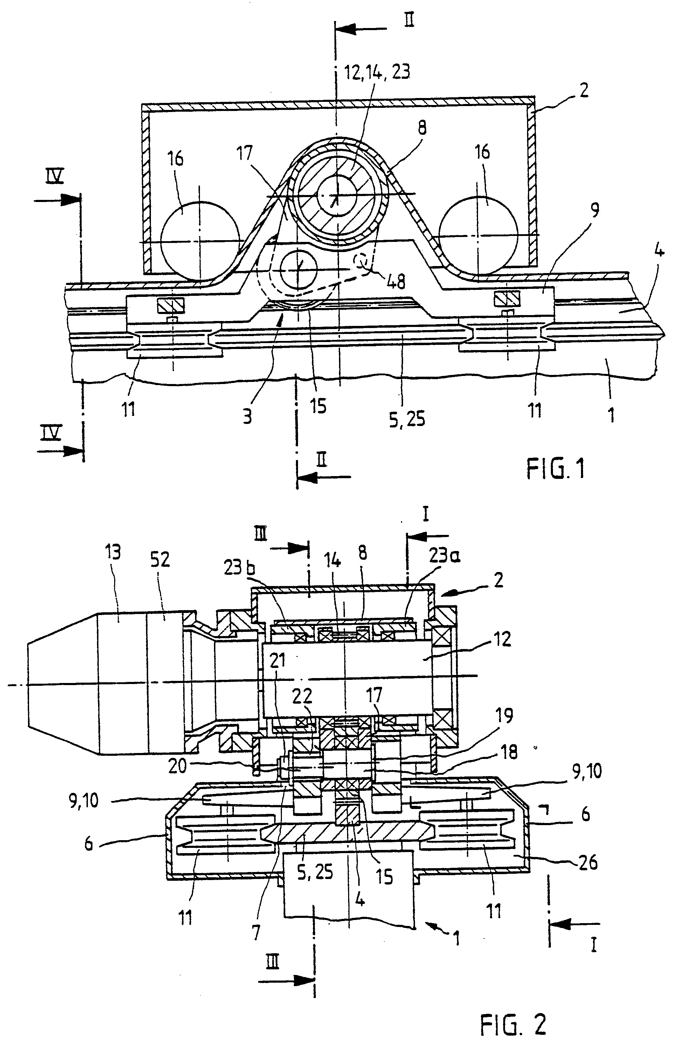

Das Maschinenteil 2 ist am Maschinenteil 1 längsbeweglich geführt und wird über einen Zahnstangentrieb 3 angetrieben. Die Führung der beiden Maschinenteile 1, 2 kann entsprechend den Ausführungsbeispielen der Fig. 2, 4, 8 und 10 unterschiedlich ausgebildet sein, wobei jedoch stets die Führungsbahn 5 am ortsfesten Maschinenteil 1 befestigt ist. Die Führungsbahn 5 befindet sich in einem bis auf einem oberen Längsschlitz 7 vollständig geschlossenen Führungskanal 26, in den durch den Schlitz 7 die Führungsmittel des bewegten Maschinenteiles 2 ragen. Zur Abdeckung des Schlitzes ist ein gespannter Riemen 8 vorgesehen, der im Bereich außerhalb des Maschinenteiles 2 unter dichter Abdeckung des Schlitzes 7 auf dem Führungskanal 26 aufliegt und der innerhalb des Maschinenteiles 2 in einer Schleife unter zwei Spannrollen 16 und über eine Umlenkrolle 23 geführt ist. Im Ausführungsbeispiel der Fig. 1 ist die Umlenkrolle 23 zwischen und oberhalb der Spannrollen 16 angeordnet. Der Riemen 8 ist durch externe, nicht dargestellte Spannmittel vorgespannt und liegt damit dicht auf dem Führungskanal 26 auf.

Wie Fig. 1, 2 und 3 zeigen, ist die Umlenkrolle 23 auf der Antriebswelle 12 des Maschinenteiles 2 frei drehbar gelagert. Die Antriebswelle 12 ist mit einem, am Gehäuse des Maschinenteiles 2 angeflanschten Antriebsmotor 13 über ein Untersetzungsgetriebe 52 verbunden.

Wie aus Fig. 2 ersichtlich, ist die Umlenkrolle 23 zweigeteilt, wobei die entstehenden Rollenhälften 23a, 23b in Axialrichtung voneinander distanziert und auf eigenen Lagern geführt sind. Zwischen den Rollenhälften 23a, 23b ist auf der Antriebswelle 12 ein Antriebsritzel 14 befestigt, das mit einem Zwischenrad 15 kämmt, das seinerseits mit der Zahnstange 4 auf der Führungsbahn 5 im Eingriff steht. Das Zwischenrad 15 ist drehbar auf einer Achse 18 gelagert, die ihrerseits in einer Gabelschwinge 17 gehalten ist. Die Gabelschwinge 17 ist mit ihren beiden Armen beidseits des Ritzels 14 auf der Antriebswelle 12 frei drehbar gelagert. Die beiden Arme der Gabelschwinge 17 können durch ein Verbindungsstück 48 zusammengehalten sein. Die Gabelschwinge 17 kann damit um die Antriebswelle 12 schwenken bzw. die Antriebswelle 12 kann sich in der Gabelschwinge 17 drehen, wobei der Zahneingriff von Ritzel 14 und Zwischenrad 15 erhalten bleibt.

Der Durchmesser der Umlenkrollenhälften 23a, 23b ist so groß gewählt, daß der aufgelegte Riemen 8 mit genügend Spiel über das Antriebsritzel 14 und die Arme der Gabelschwinge 17 zwischen den beiden Rollenhälften geführt ist und diese abdeckt.

Der Achskörper 18 weist auf der einen Seite einen Bund 19 auf, mit dem er gegen den einen Arm der Gabelschwinge 17 außenseitig anliegt. Der Achskörper 18 weist auf der anderen Seite einen Achsstummel 20 auf. Der Achsstummel 20 besitzt einen kleineren Durchmesser als der Achskörper 18 und ist gegenüber der Achse 18 exzentrisch versetzt. Der Achsstummel 20 ragt durch eine Langlochbohrung 22 im Schlittengestell 9 des Maschinenteiles 2 und trägt am jenseitigen Ende auf einem Gewinde eine Spannmutter 21. Beim Anziehen der Mutter 21 wird über den Bund 19 die Gabelschwinge 17 mit ihren beiden Armen gegen das Schlittengestell 9 gezogen und dort im Form- und Reibschluß festgehalten. Der Achskörper 18 weist mit seiner Abdrehung des Achsstummels 20 hierfür etwas Luft zum Schlittengestell 9 auf.

Bei gelöster Spannmutter 21 kann der Achsstummel 20 in der Langlochführung 22 gedreht werden. Das hat durch seine Exzentrizität gegenüber dem Achskörper 18 zur Folge, daß dieser eine Bogenbewegung gegenüber dem Schlittengestell 9 ausführt. Der Achskörper 18 ist in den beiden Armen der Gabelschwinge 17 drehbar gelagert, wodurch die Bogenbewegung auf die Gabelschwinge 17 übertragen wird. Die Gabelschwinge 17 dreht dabei um die Antriebswelle 12 und bewirkt damit bei entsprechender Exzenterstellung und Drehrichtung ein Anstellen des Zwischenrades 15 gegenüber der Zahnstange 4. Auf diese Weise kann ein etwa vorhandenes Zahnspiel ausgeglichen werden. Sobald das Zwischenrad 15 im gewünschten Maß angestellt ist, wird es in dieser Stellung durch Anziehen der Spannschraube 21 und Festklemmen der Gabelschwinge 17 gegenüber dem Schlittengestell 9 festgelegt. Durch die Drehung um eine Achse außerhalb seines Zentrums beschreibt der Achskörper 18 eine zweidimensionale Bogenbewegung. Nachdem die Gabelschwinge 17 jedoch nur den einen rotatorischen Freiheitsgrad hat, muß an anderer Stelle ein zweiter Freiheitsgrad geschaffen werden. Dazu ist die Langlochbohrung 22 vorgesehen, in der der Achsstummel 20 beim Verdrehen auf- oder abwandert. Im Sinne der Schaffung eines weiteren Freiheitsgrades, kann die Langlochbohrung 22 unterschiedlich ausgerichtet sein. Ihre Ausrichtung darf nur nicht mit dem Schwenkweg der Gabelschwinge 17 zusammenfallen.

Um eine möglichst wirksame und feinfühlige Einstellung zu ermöglichen, empfiehlt es sich, die Langlochbohrung 22 längs der Verbindungslinie zwischen den Zentren der Antriebswelle 12 und des Achskörpers 18 in Treibstellung auszurichten.

Auf diese Weise ist der Achsstummel 20 an den Wänden der Langlochbohrung 22 in Schwenkrichtung der Gabelschwinge 17 geführt und kann damit einer Bewegung in dieser Richtung nicht folgen. Der Schwenkweg der Gabelschwinge 17 hängt damit ausschließlich vom Verdrehwinkel des Achsstummels 20 ab und kann damit entsprechend feinfühlig eingestellt werden.

Wie Fig. 1 zeigt, ist der Zahnstangentrieb 3 im Bereich unter der Riemenschlaufe angeordnet. In diesem Bereich, in dem der Führungskanal 26 durch den Schlitz 7 zugänglich ist, greifen auch die Führungselemente, d. h. das Schlittengestell 9 des Maschinenteils 2 in den Führungskanal 26. Zur Erzielung einer möglichst großen Stützlänge setzt sich das Schlittengestell 9 auch außerhalb der Riemenschlaufe, also in einem Bereich, wo der Führungskanal 26 wieder vom Riemen 8 abgedeckt ist, fort. Dabei kann das Schlittengestell 9 auch über die äußeren Gehäuseabmessungen des Maschinenteiles 2 hinausragen.

Fig. 1, 4, 8 und 10 zeigen unterschiedliche Ausführungsformen einer Führung der beiden Maschinenteile 1, 2.

Im Ausführungsbeispiel der Fig. 1, 2 und 4 handelt es sich hierbei um eine Rollenführung, bei der die Führungsbahn 5 als flaches, horizontales Schwert 25 ausgebildet ist, das mit seitlichen, im Querschnitt kegelstumpfförmigen Laufflächen 24 versehen ist. Das Schlittengestell 9 besitzt seitliche Ansätze 10, die um eine vertikale Achse drehbare Führungsrollen 11 tragen. Die Führungsrollen 11 sind entsprechend den Laufflächen 24 profiliert und stehen mit diesen in horizontal und vertikal formschlüssigem Eingriff. Die Führungsrollen 11 weisen jeweils Umfangsnuten mit kegelstumpfförmigem Querschnitt auf.

Durch radiale Verspannung mittels Exzenter oder dgl. lassen sich die Führungsrollen 11 damit spielfrei von der Seite her an die Laufflächen 24 anstellen. Die gewählte Profilform erlaubt es, eine allseitig formschlüssige Führung mit jeweils nur zwei gegenüberliegenden Führungsrollen 11 an jedem Ende des Schlittengestells 9 zu erzielen und dadurch Platz zu sparen.

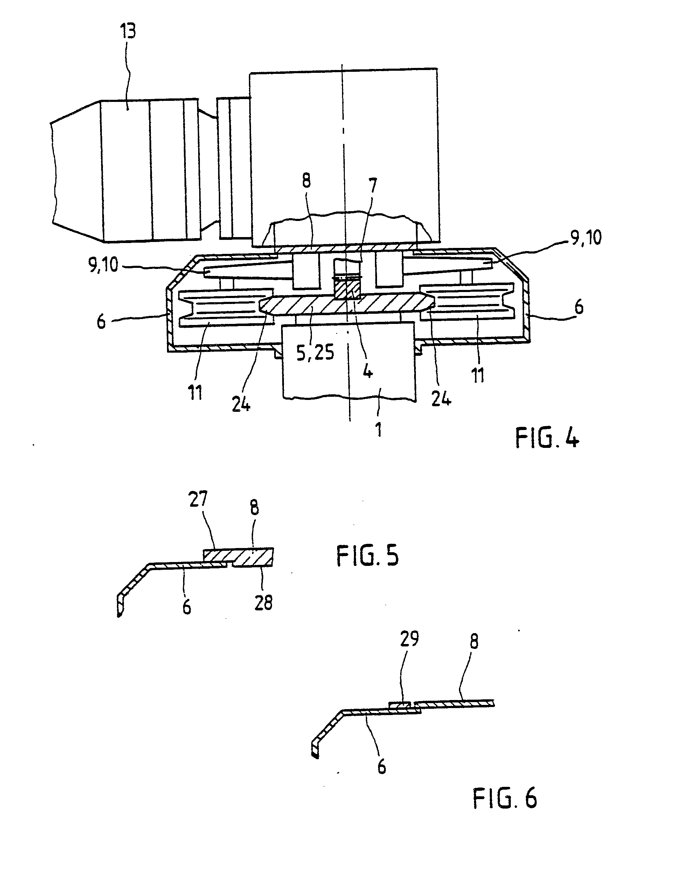

Der Führungskanal 26 wird bei einer solchen Führung durch zwei längslaufende, seitliche Abdeckbleche 6 zusammen mit dem Maschinenteil 1 gebildet. Die Abdeckbleche 6 sind am Maschinenteil 1 befestigt und lassen zwischen sich oberhalb der Führungsbahn den Schlitz 7 frei. Wie aus Fig. 4 ersichtlich, ist bei aufgelegtem Riemen 8 der Führungskanal 26 allseitig geschlossen und nimmt die komplette Führung der beiden Maschinenteile 1, 2 auf.

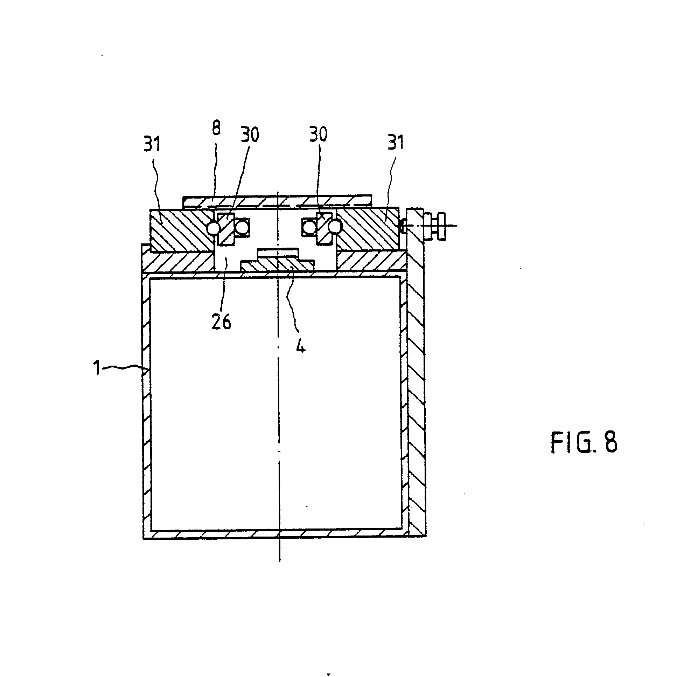

Fig. 8 zeigt eine Variante der Führung der beiden Maschinenteile 1, 2 in Form einer Kugelumlaufführung. Hierbei sind am Schlittengestell 9 (nicht dargestellt) des Maschinenteiles 2 zu beiden Seiten des Zahnstangentriebes 3 jeweils ein Paar sich gegenüberliegende Kugelkäfige 30 befestigt. Die in diesen Kugelkäfigen 30 umlaufenden Kugelreihen stehen im Eingriff mit seitlichen Führungsleisten 31, die ihrerseits auf dem Maschinenteil 1 befestigt sind und die Führungsbahn 5 bilden. Zur Erzielung von Spielfreiheit ist zumindest eine der beiden Führungsleisten 31 horizontal beweglich und von der Seite her gegenüber den Kugelkäfigen anstellbar.

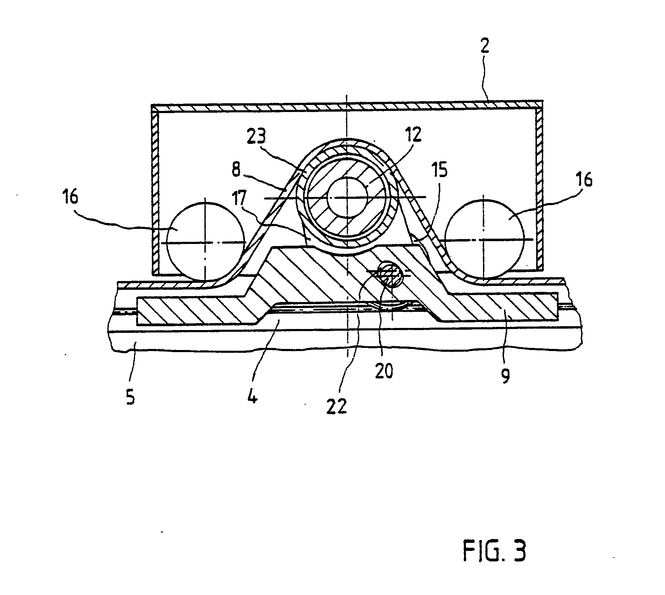

Diese Art der Kugelumlaufführung kann gegenüber dem Ausführungsbeispiel der Fig. 3 dahingehend variiert werden, daß die Führungsleisten 31 innen mit Abstand zum Durchgreifen des Zahnstangentriebes 3 angeordnet sind und mit demgegenüber außen angeordneten Kugelkäfigen 30 im Eingriff stehen.

Der Führungskanal 26 wird dann durch beidseitig außerhalb der Kugelkäfige 30 hochgezogene Leisten, die mit dem Maschinenteil 1 verbunden sind, gebildet. Der Riemen 8 liegt auf diesen Leisten auf und schließt den Führungskanal 26.

Im Ausführungsbeispiel der Fig. 8 wird demgegenüber der Führungskanal 26 von den außenliegenden Führungsleisten 31 und dem Maschinenteil 1 gebildet und vom Riemen 8 abgedeckt. Auf dem Maschinenteil 1 ist auch die Zahnstange 4 im Führungskanal 26 befestigt.

Um eine sichere Abdeckung des Führungskanales 26 durch den aufgelegten Riemen 8 zu gewährleisten, kann für diesen eine formschlüssige Führung vorgesehen sein. Hierzu kann der Riemen 8 im Querschnitt profiliert sein und aus einem breiteren Trägergurt 27 mit einer demgegenüber schmäleren Schulter 28 bestehen. Die Schulter 28 ist dann mit Spiel im Spalt 7 zwischen den Abdeckblechen geführt, während der Trägergurt 27 mit seinen seitlich überstehenden Bereichen auf den Abdeckblechen 6 links und rechts aufliegt.

Daneben ist es auch möglich, den Riemen 8 im Querschnitt rechteckig zu gestalten und zu seiner Führung mit seitlichem Abstand zum Schlitz 7 auf den Abdeckblechen 6 längslaufende Leisten 29 anzuordnen, zwischen denen der Riemen 8 geführt ist (Fig. 6).

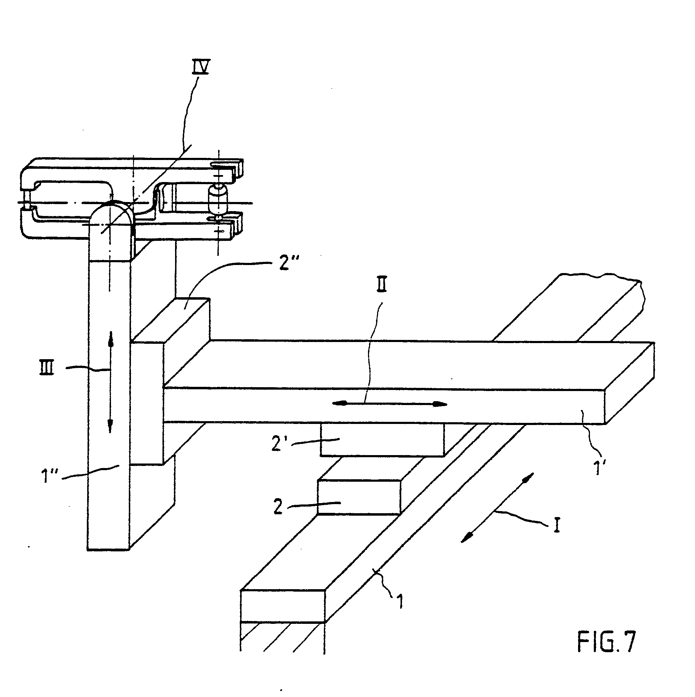

Es liegt auf der Hand, daß der in den Ausführungsbeispielen dargestellte Gegenstand nur ein Grundelement sein kann, welches sich in beliebiger Weise mit anderen, gleichartigen Grundelementen verbinden läßt, um somit zu einer mehrdimensionalen Bewegung aneinandergeführter Teile zu kommen. In Fig. 7 ist als eine von vielen Möglichkeiten eine solche Kombination in Form eines Manipulators mit drei translatorischen Achsen dargestellt. Danach ist das eine Maschinenteil 1 in irgendeiner Weise ortsfest angeordnet bzw. mit dem Boden verbunden. Mit diesem Maschinenteil 1 ist das andere Maschinenteil 2 beweglich verbunden, welches längs der durch einen Pfeil angedeuteten Achse I verschieblich am Maschinenteil 1 geführt ist. Mit der ersten Achse I werden im allgemeinen langhubige Bewegungen ausgeführt, so daß für die Maschinenteilpaarung 1, 2 der in den Ausführungsbeispielen dargestellte Zahnstangentrieb 3 Verwendung findet.

Die beiden anderen Achsen II und III werden durch die Maschinenteilkombinationen 1', 2' und 1'', 2'' gebildet. Das Maschinenteil 1'' trägt ein Werkzeug, hier beispielsweise eine Punktschweißzange, das selbst weitere Achsen, hier eine rotatorische Achse IV, aufweisen kann.

Für die Bewegung der Maschinenteile entlang der Achsen II und III können wegen den kürzeren Hüben Zahnriementriebe eingesetzt werden. Es ist aber auch möglich, für zwei oder auch alle drei Achsen Zahnstangentriebe zu verwenden. Die Maschinenteile 1, 1' und 1'' sowie 2, 2' und 2'' sind untereinander von der Grundgestaltung her baugleich.

Soll beispielsweise statt des Zahnriementriebes für die Achse II ein Zahnstangentrieb entsprechend den Ausführungsbeispielen verwendet werden, wird einfach der Zahnriemen gegen einen glatten Abdeckriemen getauscht und auf der Führungsbahn im Maschinenteil 1' eine Zahnstange angebracht. Auf der Antriebswelle ist bei den Zahnriementrieben ein der Riemenbreite entsprechendes Antriebsritzel angebracht, das beim Umrüsten gegen das schmälere Antriebsritzel des Zahnstangentriebes getauscht wird. Auf der Antriebswelle brauchen dann nur noch die Gabelschwinge 17 und die zweigeteilte Umlenkrolle 23 aufgezogen zu werden, und der Antrieb ist komplett umgerüstet. Selbstverständlich sind die Maschinenteile 1 und 2 für die Nach- und Umrüstung von Zahnstangentrieb auf Zahnriementrieb und umgekehrt standardmäßig vorbereitet, damit nur noch Montagearbeiten notwendig sind.

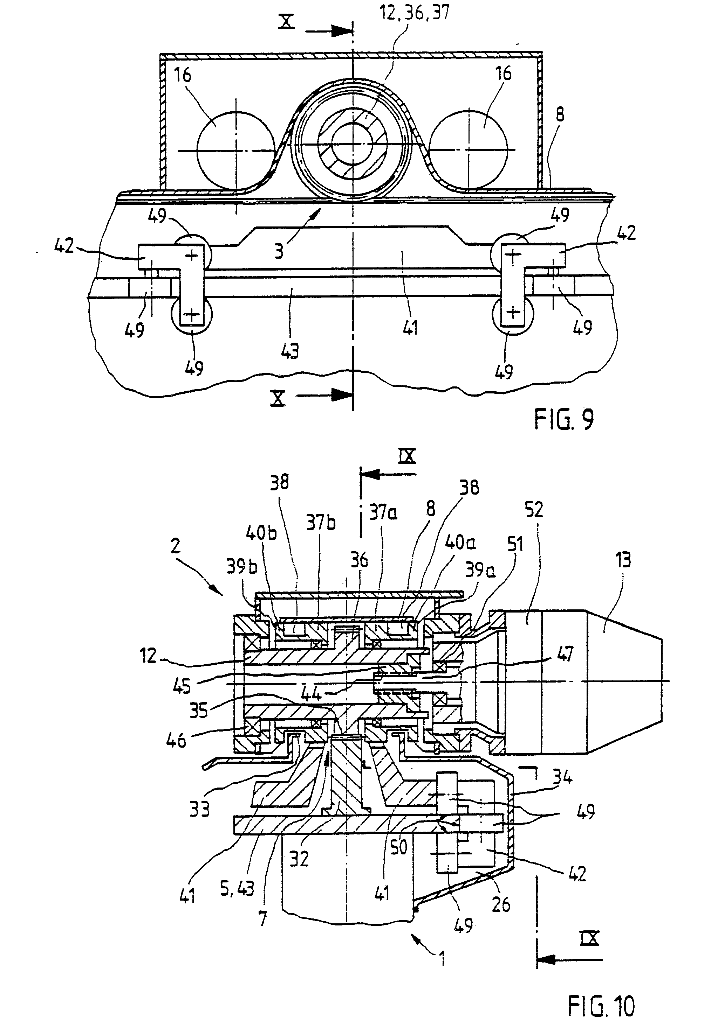

In Fig. 9 und 10 ist die Variation eines Zahnstangentriebes gegenüber dem Ausführungsbeispiel der Fig. 1 dargestellt. Hierbei handelt es sich um einen Direkttrieb, bei dem das Antriebsritzel 36 direkt mit der Zahnstange 32 kämmt. Bei diesem Direkttrieb rutschen die Spannrollen 16 und die Umlenkrolle 37 in ihrem gegenseitigen Höhen- und Seitenabstand näher zusammen als im Ausführungsbeispiel der Fig. 1. Um einen Direkteingriff von Ritzel 36 und Zahnstange 32 zu ermöglichen, kann einerseits der Ritzeldurchmesser vergrößert und/oder andererseits die Ritzelachse, d. h. die Antriebswelle 12 nach unten versetzt werden. Der Vergrößerung des Ritzeldurchmessers sind jedoch Grenzen gesetzt, da der Durchmesser der Umlenkrolle 37 auf der einen Seite stets größer als der Ritzeldurchmesser sein muß, auf der anderen Seite aber nicht beliebig vergrößert werden kann.

Die Verkleinerung des Höhenabstandes der Achsen von Spannrollen 16 und Umlenkrolle 37 hat zur Folge, daß bei der Umrüstung auf den Zahnriementrieb der Umschlingungswinkel des anstelle der Umlenkrolle vorgesehenen Antriebsritzels zu klein wird und nicht mehr genügend Zähne im Eingriff mit dem Ritzel stehen. Zur Vergrößerung des Umschlingungswinkels müssen dadurch die Spannrollen 16 im Seitenabstand näher an das Antriebsritzel bzw. die Umlenkrolle 37 beim Zahnstangentrieb heranrücken.

Wie aus Fig. 10 ersichtlich ist, bedingt der direkte Zahnstangentrieb auch noch weitere konstruktive Änderungen gegenüber dem Ausführungsbeispiel der Fig. 1.

Einerseits kämmt das Antriebsritzel 36 direkt mit der Zahnstange 32. Andererseits muß der Durchmesser der Umlenkrolle 37 größer sein als der Ritzeldurchmesser, um den Riemen über das Ritzel führen zu können. Das bedeutet, daß auf der Unterseite die Umlenkrolle noch tiefer in den Schlitz 7 eingreifan muß als das Antriebsritzel 36. Dem steht entgegen, daß die Ränder 33 der Abdeckbleche 34 über der Zahnstangenoberkante 35 angeordnet sein müssen, um den Führungskanal 26 und damit auch die Zahnstange 32 abzudecken. Um diese Höhenüberschneidung von Umlenkrolle 37 und Abdeckblech 34 möglichst klein zu halten, ist die Zahnstange 32 höher als diejenige des Ausführungsbeispiels der Fig. 1 und endet mit ihrer Oberkante 35 knapp unterhalb der Abdeckblechränder 33.

Wird, wie im Ausführungsbeispiel der Fig. 10 gezeigt, ein textiler Abdeckriemen 8 mit einer Auflage aus Gummi oder Kunststoff verwendet, muß dieser an seinen Rändern auf der Umlenkrolle 37 abgestützt werden. Die Rollenhälften 37a, 37b sind damit zusammen breiter als der Riemen 8 und auch breiter als der Schlitz 7. Um dennoch den Riemen 8 auf den Abdeckblechrändern 33 auflegen zu können, sind diese Ränder 33 stufenartig nach oben vorspringend profiliert und ragen jeweils in eine Umfangsnut 38 der Rollenhälften 37a, 37b. Die Rollenhälften 37a, 37b übergreifen damit die Ränder 33 und reichen teilweise in den Schlitz 7 hinein.

Der Riemen 8 ist mit seinen Längskanten auf Borden 40a, 40b unterstützt, deren Außenkanten 39a, 39b für eine sichere Führung noch mit Abstand zu den Riemenkanten angeordnet sind.

Bei Verwendung eines metallischen Bandes, vorzugsweise eines Stahlbandes als Riemen 8, brauchen die Längsränder nicht unterstützt zu werden, weil durch die Wölbung des Metallbandes um die Umlenkrolle 37 die Ränder des Metallbandes versteift sind. Die Borde 40a, 40b können dadurch entfallen. Damit kann in Variation zum Ausführungsbeispiel der Fig. 10 die Umlenkrolle 37 schmäler als der Riemen 8 sein und vollständig in den Schlitz 7 eingreifen, wobei der breitere Riemen 8 noch genügend Stützfläche auf den Abdeckblechrändern 33 findet.

Fig. 10 zeigt die Ausbildung und Lagerung der Antriebswelle 12 im Detail. Die Antriebswelle 12 ist hier als ein Teil mit dem Antriebsritzel 36 ausgebildet. Das Ritzel kann aber auch aufgezogen sein.

Die Antriebswelle 12 ist eine Hohlwelle, die auf einer Buchse 45, vorzugsweise aus Stahl, geführt und mit dieser drehschlüssig durch Schrauben oder dgl. verbunden ist. Hierfür weist die Buchse 45 einen Bund auf.

Die Buchse 45 ist mit der Antriebswelle 12 auf einen Wellenstummel 47 gesteckt und mit diesem über eine selbstzentrierende Evolventenverzahnung 44 drehschlüssig verbunden. Der Wellenstummel 47 stellt die Abtriebsseite des Untersetzungsgetriebes 52 dar und ist im Getriebelager 51 gelagert. Die Antriebswelle 12 ist damit über die Buchse 45, den Wellenstummel 47 und das Getriebelager 51 auf der einen Seite mittelbar abgestützt. Auf der Gegenseite ist die Antriebswelle direkt in einem Festlager 46 gelagert. Mit dieser Art der Lagerung werden Überbestimmungen vermieden und die Antriebswelle 12 läßt sich leicht austauschen. Auf der Antriebswelle 12 sind die Rollenhälften 37a, 37b drehbar gelagert.

Die in Fig. 10 gezeigte Ausbildung und Lagerung der Antriebswelle 12 läßt sich auch für einen Zahnstangentrieb 3 mit Zwischenrad 15 entsprechend dem Ausführungsbeispiel der Fig. 1 bis 3 verwenden, wobei auch die Gabelschwinge 17 auf der Antriebswelle 12 drehbar gelagert ist.

Zum Wechsel des Antriebsritzels 36 kann nach Entfernen des Festlagers 46 und der entsprechenden Gehäusewand das Antriebsritzel 36 mitsamt der Antriebswelle 12, der Buchse 45 und der Umlenkrolle 37 sowie einer eventuellen Gabelschwinge 17 vom Wellenstummel 47 abgezogen und gegen Umrüstteile ausgetauscht werden.

Das Ausführungsbeispiel von Fig. 9 und 10 zeigt außerdem eine Variation der Rollenführung, die sich durch besonders hohe Tragkraft auszeichnet und vor allem für schwere Maschinenteile geeignet ist. Diese Rollenführung kann aber auch in Verbindung mit einem leichten Maschinenteil 2 und einem direkten Zahnstangentrieb 3 entsprechend dem Ausführungsbeispiel der Fig. 10 verwendet werden.

Die Führungsbahn 5 ist hier als flaches, horizontales und im Querschnitt rechteckiges Schwert 43 ausgebildet. Das Schwert 43 hat damit an seinen beiden Längsrändern jeweils drei gerade Laufbahnen 50. Das entsprechend der höheren Zahnstange 32 profilierte Schlittengestell 41 weist an seinen Ansätzen 42 jeweils drei Führungsrollen 49 auf, die mit den Laufbahnen 50 im Eingriff stehen. Die beiden um eine horizontale Achse drehbaren Führungsrollen 49 und die um die vertikale Achse drehbare Führungsrolle 49 umgreifen damit die Schwertränder formschlüssig von drei Seiten. Aus Platzgründen stehen die obere und untere Führungsrolle 49 übereinander, während die seitliche Führungsrolle 49 demgegenüber versetzt ist. Zur spielfreien Einstellung der Führung können die untere und die seitliche Führungsrolle 49 gegenüber ihren Laufflächen 50 durch exzentrische Verstellung ihrer Achsen oder dgl. angestellt werden.

Liste der Bezugszeichen

1 das eine Maschinenteil, Balken
2 das andere Maschinenteil, Werkzeugträger
3 Zahnstangentrieb
4 Zahnstange
5 Führungsbahn
6 Abdeckblech
7 Schlitz
8 Riemen
9 Schlittengestell
10 Ansatz
11 Führungsrolle
12 Antriebswelle
13 Antriebsmotor
14 Antriebsritzel
15 Zwischenrad
16 Spannrad
17 Gabelschwinge
18 Achse, Achskörper
19 Bund
20 Achsstummel
21 Mutter
22 Langlochbohrung
23 Umlenkrolle
23a Rollenhälfte
23b Rollenhälfte
24 Lauffläche
25 Schwert
26 Führungskanal
27 Trägergurt
28 Schulter
29 Leiste
30 Kugelkäfig
31 Führungsleiste
32 Zahnstange
33 Rand
34 Abdeckblech
35 Zahnstangenoberkante

36 Antriebsritzel
37 Umlenkrolle
37a Rollenhälfte
37b Rollenhälfte
38 Umfangsnut
39a Rollenhälftenaußenkante
39b Rollenhälftenaußenkante
40a Bord
40b Bord
41 Schlittengestell
42 Ansatz
43 Schwert
44 Spielfreie Verzahnung, Evolventenverzahnung
45 Buchse
46 Festlager
47 Wellenstummel
48 Verbindungsstück
49 Führungsrolle
50 Lauffläche
51 Getriebelager
52 Untersetzungsgetriebe

**Patentansprüche**

1. Zahnstangentrieb (3) für die Erzeugung einer Relativbewegung zwischen zwei aneinandergeführten Maschinenteilen (1, 2), wobei zumindest die am einen Maschinenteil (1) angeordnete Zahnstange (4) durch einen Abdeckriemen (8) geschützt ist, der im anderen Maschinenteil (2) in einer Schlaufe unter zwei Spannrollen (16) und über eine Umlenkrolle (23, 37) geführt ist, dadurch gekennzeichnet, daß die Umlenkrolle (23, 37) frei drehbar auf der Antriebswelle (12) des Zahnstangentriebes (3) angeordnet ist und aus zwei Rollenhälften (23a, 23b, 37a, 37b) besteht, die axial voneinander distanziert zu beiden Seiten des Antriebsritzels (14, 36) angeordnet sind und einen größeren Durchmesser als das Antriebsritzel (14, 36) aufweisen.

2. Zahnstangentrieb nach Anspruch 1, dadurch gekennzeichnet, daß das Antriebsritzel (14) über ein Zwischenrad (15) auf die Zahnstange (4) treibt, wobei das Zwischenrad (15) mit seiner Achse (18) in einer Gabelschwinge (17) gelagert ist, die ihrerseits zwischen den Rollenhälften (23a, 23b) auf der Antriebswelle (12) drehbar gelagert und ortsfest gegenüber ihrem Maschinenteil (2) fixierbar ist.

3. Zahnstangentrieb nach Anspruch 2, dadurch gekennzeichnet, daß die Achse (18) einen vorspringenden Achsstummel (20) mit kleinerem Kreisquerschnitt aufweist, der exzentrisch gegenüber der Achse (18) angeordnet und in einer Langlochbohrung (22) im Schlittengestell (9) des Maschinenteiles (2) geführt und festklemmbar ist.

4. Zahnstangentrieb nach Anspruch 3, dadurch gekennzeichnet, daß die Langlochbohrung (22) in der Richtung der Verbindungslinie zwischen den Mittelpunkten von Antriebsritzel (14) und Zwischenrad (15) in Treibstellung geneigt ist.

5. Zahnstangentrieb nach Anspruch 1, dadurch gekennzeichnet, daß das Antriebsritzel (36) direkt mit der Zahnstange (32) kämmt.

6. Zahnstangentrieb nach einem der vorausgehenden Ansprüche, dadurch gekennzeichnet, daß die Führungsbahn (5) am ersten Maschinenteil (1) in einem bis auf einen Längsschlitz (7) völlig geschlossenen Führungskanal (26) angeordnet ist, wobei durch den Schlitz (7) die Führungselemente des zweiten Maschinenteils (2) ragen und daß der Schlitz (7) im nicht vom zweiten Maschinenteil (2) überdeckten Bereich vom Riemen (8) abgedeckt wird.

7. Zahnstangentrieb nach Anspruch 6, dadurch gekennzeichnet, daß der Führungskanal (26) vom Maschinenteil (1) zusammen mit zwei seitlichen Abdeckblechen (6, 34) gebildet wird, die zwischen sich den Schlitz (7) freilassen.

8. Zahnstangentrieb nach Anspruch 5, 6 und 7, dadurch gekennzeichnet, daß die den Schlitz (7) begrenzenden Ränder (33) der Abdeckbleche (34) stufenartig ausgebildet sind und in entsprechend profilierte Umfangsnuten (38) der Umlenk-Rollenhälften (37a, 37b) greifen.

9. Zahnstangentrieb nach Anspruch 8, dadurch gekennzeichnet, daß die Zahnstange (32) mit ihrer Oberkante (35) bis knapp unterhalb der stufenartigen Ränder (33) reicht.

10. Zahnstangentrieb nach einem der vorausgehenden Ansprüche, dadurch gekennzeichnet, daß die Antriebswelle (12) mit dem Antriebsritzel (36) eine Einheit bildet, als Hohlwelle gestaltet und auf einer Buchse (45) drehschlüssig geführt ist, wobei die Buchse (45) über eine selbstzentrierende Verzahnung, vorzugsweise eine Evolventenverzahnung (44), auf einem Wellenstummel (47) des Antriebs in einer drehschlüssigen Steckverbindung geführt ist.

11. Zahnstangentrieb nach Anspruch 10, dadurch gekennzeichnet, daß die Antriebswelle (12) auf der einen Seite über den Wellenstummel (47) in einem Getriebelager (51) und auf der anderen Seite über ein Festlager (46) im Gehäuse des Maschinenteils (2) gelagert ist.

12. Zahnstangentrieb nach Anspruch 1 oder einem der folgenden, dadurch gekennzeichnet, daß die Führungsbahn (5) die Zahnstange (4, 32) trägt und als flaches Schwert (25) mit kegelstumpfförmig angeschrägten, seitlichen Laufflächen (24) ausgebildet ist, mit denen entsprechend profilierte Führungsrollen (11) im vertikal und horizontal formschlüssigen Eingriff stehen.

13. Zahnstangentrieb nach einem der vorausgehenden Ansprüche, dadurch gekennzeichnet, daß die Führungsbahn (5) die Zahnstange (4, 32) trägt und als flaches, im Querschnitt rechteckiges Schwert (43) mit geraden Laufflächen (50) ausgebildet ist, mit denen jeweils drei Führungsrollen (49) im allseitig formschlüssigen Eingriff stehen.

14. Zahnstangentrieb nach Anspruch 1, dadurch gekennzeichnet, daß der Riemen (8) am Führungskanal (26) formschlüssig geführt ist.

15. Zahnstangentrieb nach Anspruch 1 oder einem der folgenden, dadurch gekennzeichnet, daß der Abdeckriemen (8) als textiler Riemen mit einer Auflage aus Gummi oder Kunststoff oder als metallisches Band ausgebildet ist.

16. Zahnstangentrieb nach Anspruch 1 oder einem der folgenden, gekennzeichnet durch seine mehrfache Anordnung bei einem zwei- oder dreidimensionalen Bewegungen erzeugenden Manipulator.

**Claims**

1. Rack-and-pinion drive (3) for producing a relative movement between two machine parts (1, 2) guided on one another, wherein at least the rack (4) arranged on one machine part (1) is protected by a cover belt (8) which is guided in the other machine part (2) in a loop beneach two tension rollers (16) and over one deflection roller (23, 37), characterized in that the deflection roller (23, 37) is arranged in a freely rotatable manner on the drive shaft (12) of the rack-and-pinion drive (3) and consists of two roller halves (23a, 23b, 37a, 37b) which are arranged at an axial distance from one another on both sides of the drive pinion (14, 36) and have a larger diameter than the drive pinion (14, 36).

2. Rack-and-pinion drive according to Claim 1, characterized in that the drive pinion (14) drives onto the rack (4) via an intermediate gear (15), the intermediate gear (15) being mounted with its spindle (18) in a forked rocker (17) which in turn is rotatably mounted between the roller halves (23a, 23b) on the drive shaft (12) and can be fixed in a stationary position relative to its machine part (2).

3. Rack-and-pinion drive according to Claim 2, characterized in that the spindle (18) has a projecting spindle stub (20) with a smaller circular cross-section which is arranged eccentrically relative to the spindle (18) and is guided and can be clamped in an elongated bore (22) in the slide frame (9) of the machine part (2).

4. Rack-and-pinion drive according to Claim 3, characterized in that the elongated bore (22) is inclined in the direction of the connecting line between the centre points of the drive pinion (14) and the intermediate gear (15) in the driving position.

5. Rack-and-pinion drive according to Claim 1, characterized in that the drive pinion (36) meshes directly with the rack (32).

6. Rack-and-pinion drive according to one of the preceding claims, characterized in that the guideway (5) on the first machine part (1) is arranged in a guide channel (26) which is completely closed except for a longitudinal slot (7), wherein the guide elements of a second machine part (2) protrude through the slot (7), and that the slot (7) is covered by the belt (8) in the area which is not overlapped by the second machine part (2).

7. Rack-and-pinion drive according to Claim 6, characterized in that a guide channel (26) is formed by the machine part (1) together with two lateral cover plates (6, 34) which leave the slot (7) open between them.

8. Rack-and-pinion drive according to Claims 5, 6 and 7, characterized in that the margins (33) of the cover plates (34) defining the slot (7) are made steplike and reach into correspondingly profiled peripheral grooves (38) of the deflection roller halves (37a, 37b).

9. Rack-and-pinion drive according to Claim 8, characterized in that the rack (32), with its upper edge (35), extends up to just beneath the steplike margins (33).

10. Rack-and-pinion drive according to one of the preceding claims, characterized in that the drive shaft (12) forms a unit with the drive pinion (36), is made a hollow shaft and is guided non-rotatably on a bush (45), the bush (45) being guided via a self-centring tooth system, preferably an involute tooth system (44), on a shaft stub (47) of the drive in a non-rotatable slip-in connection.

11. Rack-and-pinion drive according to Claim 10, characterized in that the drive shaft (12) is mounted on one side via the shaft stub (47) in a gear-unit bearing (51) and on the other side via a fixed bearing (46) in the housing of the machine part (2).

12. Rack-and-pinion drive according to Claim 1 or one of the following claims, characterized in that a guide way (5) supports the rack (4, 32) and is designed as a flat blade (25) having bevelled, lateral running surfaces of truncated-cone shape (24) with which the correspondingly profiled guide rollers (11) are vertically and horizontally in positive engagement.

13. Rack-and-pinion drive according to one of the preceding claims, characterized in that the guideway (5) supports the rack (4, 32) and is designed as a flat blade (43) rectangular in cross-section and having straight running surfaces (50) with which three guide rollers (48) each are in positive engagement on all sides.

14. Rack-and-pinion drive according to Claim 1, characterized in that the belt (8) is guided positively on the guide channel (26).

15. Rack-and-pinion drive according to Claim 1 or one of the following claims, characterized in that the cover belt (8) is designed as a textile belt with a rubber or plastic coating or as a metallic band.

16. Rack-and-pinion drive according to Claim 1 or one of the following claims, characterized by its multiple arrangement in a manipulator producing two-dimensional or three-dimensional movements.

**Revendications**

1. Dispositif d'entraînement à crémaillère (3) servant à produire un déplacement relatif entre deux pièces de machine (1, 2) guidées l'une près de l'autre, et dans lequel au moins la crémaillère située sur une pièce de machine (1) est protégée par une courroie de recouvrement (8) qui circule, dans l'autre pièce de machine (2), sous la forme d'une boucle en passant sous deux galets de tension (16) et sur un galet de renvoi (23, 37), caractérisé par le fait que le galet de renvoi (23, 37) est monté de manière à pouvoir tourner librement sur l'arbre d'entraînement (12) du dispositif d'entraînement à crémaillère (3) et est constitué par deux moitiés de galet (23a, 23b, 37a, 37b) qui sont disposés à une certaine distance axiale réciproque, des deux côtés du pignon d'entraînement (14, 36) et possèdent un diamètre supérieur à celui du pignon d'entraînement (14, 36).

2. Dispositif d'entraînement à crémaillère suivant la revendication 1, caractérisé par le fait que le pignon d'entraînement (14) agit sur la crémaillère (4) par l'intermédiaire d'un pignon intercalaire (15), qui est monté par son axe (18) dans une bielle oscillante en forme de fourche (17) qui, pour sa part, est montée rotative sur l'arbre d'entraînement (12) entre les moitiés de galet (23a, 23b) et peut être fixée par rapport à la pièce de machine (2) qui la porte.

3. Dispositif d'entraînement à crémaillère suivant la revendication 2, caractérisé par le fait que l'axe (18) comporte un bout d'axe saillant (20) possédant une section transversale circulaire plus petite et qui est agencé avec excentrement par rapport à l'axe (18) et est guidé et peut être bloqué dans un perçage allongé (22) ménagé dans le châssis (9) du chariot de la pièce de machine (2).

4. Dispositif d'entraînement à crémaillère suivant la revendication 3, caractérisé par le fait que le perçage allongé (22) est incliné, dans la position d'entraînement, dans la direction de la droite reliant les centres du pignon d'entraînement (14) et du pignon intercalaire (15).

5. Dispositif d'entraînement à crémaillère suivant la revendication 1, caractérisé par le fait que le pignon d'entraînement (36) engrène directement avec la crémaillère (32).

6. Dispositif d'entraînement à crémaillère suivant l'une des revendications précédentes, caractérisé par le fait que la voie de guidage (5) sur la première pièce de machine (1) est disposée dans un canal de guidage (26) complètement fermé hormis au niveau d'une fente longitudinale (7), auquel cas les organes de guidage de la seconde pièce de machine (2) s'engagent dans la fente (7), et que la fente (7) est recouverte par la courroie (8) dans la zone non recouverte par la seconde pièce de machine (2).

7. Dispositif d'entraînement à crémaillère suivant la revendication 6, caractérisé par le fait que le canal de guidage (26) est formé par la pièce de machine (1) ainsi que par deux tôles latérales de recouvrement (6, 34), qui délimitent entre elles la fente (7).

8. Dispositif d'entraînement à crémaillère suivant les revendications 5, 6 et 7, caractérisé par le fait que les bords 33, qui limitent la fente (7), des tôles de recouvrement (33) sont réalisés avec une forme étagée et s'engagent dans des rainures périphériques (38) profilées de façon correspondante des moitiés (37a, 37b) du galet de renvoi.

9. Dispositif d'entraînement à crémaillère suivant la revendication 8, caractérisé par le fait que la crémaillère (32) s'étend par son bord supérieur (25) jusqu'à un niveau situé juste au-dessous des bords étagés (33).

10. Dispositif d'entraînement à crémaillère suivant l'une des revendications précédentes, caractérisé par le fait que l'arbre d'entraînement (12) forme, avec le pignon d'entraînement (36), une unité et est agencé sous la forme d'un arbre creux et guidé avec blocage en rotation sur un manchon (45), qui est guidé par l'intermédiaire d'une denture réalisant un auto-centrage, de préférence une denture à développante (44), sur un bout d'arbre (47) du dispositif d'entraînement, selon une liaison à enfichage avec blocage en rotation.

11. Dispositif d'entraînement à crémaillère suivant la revendication 10, caractérisé par le fait que l'arbre d'entraînement (12) est monté d'un côté au moyen du bout d'arbre (47) dans un palier de transmission (51) et, de l'autre côté, par l'intermédiaire d'un palier fixe (46) dans le boîtier de la pièce de machine (2).

12. Dispositif d'entraînement à crémaillère suivant la revendication 1 ou l'une des revendications suivantes, caractérisé par le fait que la voie de guidage (5) porte la crémaillère (4, 32) et est réalisée sous la forme d'une semelle plate (25) comportant des surfaces latérales de roulement (24) biseautées avec une forme tronconique et avec lesquelles des galets de guidage (11) profilés de façon correspondante engrènent selon une liaison par formes complémentaires verticalement et horizontalement.

13. Dispositif d'entraînement à crémaillère suivant l'une des revendications précédentes, caractérisé par le fait que la voie de guidage (5) porte la crémaillère (4, 32) et est réalisée sous la forme d'une semelle plate (43) possédant une section transversale rectangulaire munie de surfaces rectilignes de roulement (5), avec lesquelles respectivement trois galets de guidage (49) engrènent selon une liaison par formes complémentaires de tous côtés.

14. Dispositif d'entraînement à crémaillère suivant la revendication 1, caractérisé par le fait que la courroie (8) est guidée selon une liaison par formes complémentaires sur le canal de guidage (26).

15. Dispositif d'entraînement à crémaillère suivant la revendication 1 ou l'une des suivantes, caractérisé par le fait que la courroie de recouvrement (8) est réalisée sous la forme d'une courroie textile comportant un revêtement en caoutchouc ou en matière plastique, ou bien sous la forme d'une bande métallique.

16. Dispositif d'entraînement à crémaillère suivant la revendication 1 ou l'une des revendications suivantes, caractérisé par son utilisation multiple dans un manipulateur exécutant des déplacements bidimensionnels ou tridimensionnels.

0 170 773

FIG. 1

FIG. 2

FIG. 3

FIG. 4

FIG. 5

FIG. 6

FIG.7

FIG. 8

FIG. 9

FIG. 10

6